(19) **Europäisches Patentamt / European Patent Office / Office européen des brevets**

(11) **EP 2 093 889 B1**

(12) **FASCICULE DE BREVET EUROPEEN**

(45) Date de publication et mention
de la délivrance du brevet:
**13.04.2016 Bulletin 2016/15**

(51) Int Cl.:
*H04B 1/12* *(2006.01)* *H04B 1/707* *(2006.01)*

(21) Numéro de dépôt: **09153253.1**

(22) Date de dépôt: **19.02.2009**

(54) **Procédé de traitement d'un premier et d'un deuxieme signal superposés au sein d'un signal composite incident, et dispositif correspondant**

Verarbeitungsverfahren eines ersten und eines zweiten überdeckten Signals innerhalb eines komplexen Unfallsignals und entsprechende Vorrichtung

Method for processing a first and second signal superimposed within an incident aggregate signal and corresponding device.

(84) Etats contractants désignés:
**AT BE BG CH CY CZ DE DK EE ES FI FR GB GR HR HU IE IS IT LI LT LU LV MC MK MT NL NO PL PT RO SE SI SK TR**

(30) Priorité: **19.02.2008 FR 0800882**

(43) Date de publication de la demande:
**26.08.2009 Bulletin 2009/35**

(73) Titulaire: **THALES**
**92200 Neuilly-sur-Seine (FR)**

(72) Inventeurs:
• **Polaert, Jean**
**78540, VERNOUILLET (FR)**
• **Kozlovsky, Nicolas**
**78000, VERSAILLES (FR)**
• **Julie, Jean-Jacques**
**94270, LE KREMLIN BICETRE (FR)**

(74) Mandataire: **Lucas, Laurent Jacques et al**
**Marks & Clerk France**
**Conseils en Propriété Industrielle**
**Immeuble Visium**
**22, Avenue Aristide Briand**
**94117 Arcueil Cedex (FR)**

(56) Documents cités:
**EP-A- 0 491 668** **US-A1- 2003 035 469**
**US-A1- 2003 206 577**

**Description**

L'invention appartient au domaine des télécommunications numériques, et concerne notamment le traitement de deux signaux superposés contenus dans un même signal dit signal composite. Ce signal composite peut par exemple correspondre à la superposition de deux signaux de communication numérique distincts, émis par des émetteurs tels que des balises terrestres ou maritimes, et reçu par un récepteur par exemple incorporé au sein d'un satellite, via un même canal de réception.

Dans ce cas de figure, et en particulier lors de l'utilisation de balises de type ARGOS standard à bas débit (référencées « ARGOS STD BD »), les signaux appartiennent au même domaine temporel et fréquentiel, et ont des niveaux d'amplitude voisins.

Ces balises ARGOS STD BD sont très répandues et émettent cycliquement des messages (signaux numériques), de manière indépendante les unes par rapport aux autres. Les messages émis par les différentes balises sont reçus aléatoirement par un satellite, avec une probabilité non nulle de superposition des messages dans les domaines temporels et fréquentiels.

Les signaux numériques émis par les balises ARGOS STD BD sont de type NRZ (« Non Return to Zero » en langue anglaise), encodés à l'aide du code Manchester, particulièrement bien adapté à ce type de signaux numériques. Ces signaux numériques ne possèdent pas de code correcteur d'erreur, et ne sont pas orthogonaux entre eux. Il est donc particulièrement difficile de discriminer les signaux entre eux grâce à leur provenance à l'entrée du satellite. Par ailleurs, les horloges au niveau bit des balises ne sont pas synchrones.

Une solution propose que chaque satellite mémorise un gabarit donné de façon à analyser la présence des signaux numériques superposés, reçus des balises. Cette analyse porte sur des écarts de niveaux et de fréquences entre les signaux numériques superposés, à l'aide des différents paramètres du gabarit. Toutefois, si les signaux numériques sont considérés comme gênés à l'issue de cette analyse, ils sont rejetés et leur traitement n'est pas réalisé. Le rejet des signaux gênés entraîne une perte de l'information ou à tout le moins un retard dans l'élaboration de celle-ci.

La superposition temps/fréquences des signaux numériques reçus par le satellite a pour conséquence une réduction significative de la probabilité de détection (analyse par le gabarit puis traitement), typiquement de l'ordre de 20%.

Un document US 2003/206577 A1 divulgue un traitement spatio-temporel adaptatif associé à une détection multi-utilisateur dans des systèmes AMCR sans fil.

Un document EP-A-0 491 668 divulgue une démodulation soustractive de signaux CDMA.

Un document US 2003/0035469 A1 décrit une égalisation linéaire MMSE avec annulation d'interférence parallèle dans un système AMRC.

L'invention a notamment pour but d'apporter une solution à ces problèmes, en particulier lorsque deux messages superposés sont reçus par le récepteur. En effet, pour des balises de type ARGOS STD BD, 75% des cas de figure concerne la superposition de deux messages uniquement.

A cet effet, selon un premier aspect, il est proposé un procédé de traitement d'un premier et d'un deuxième signal à partir d'un signal composite incident comprenant lesdits premier et deuxième signaux superposés tel que décrit par les revendications, le premier signal ayant une amplitude supérieure à celle du deuxième signal.

Selon un autre aspect, il est proposé un dispositif de traitement d'un premier et d'un deuxième signal à partir d'un signal composite incident comprenant lesdits premier et deuxième signaux superposés tel que décrit par les revendications, le premier signal ayant une amplitude supérieure à celle du deuxième signal.

Selon un autre aspect, il est proposé une utilisation du dispositif tel que mentionné ci-dessus, au sein d'un satellite apte à recevoir des signaux émis par des balises de type ARGOS.

Selon un autre aspect, il est proposé un système de traitement comprenant au moins deux dispositifs tel que décrits ci-avant, montés en cascade.

Selon un autre aspect, il est proposé une utilisation du système tel que décrit ci-dessus, au sein d'un satellite apte à recevoir des signaux émis par des balises de type ARGOS.

D'autres avantages et caractéristiques de l'invention apparaîtront à l'examen de la description détaillée d'un mode de mise en oeuvre d'un procédé selon l'invention, et de modes de réalisation nullement limitatifs, et des dessins annexés sur lesquels :

- la figure 1 illustre un exemple d'utilisation de l'invention ici pour des signaux numérique émis par des balises de type ARGOS,
- la figure 2 représente un mode de mise en oeuvre d'un procédé selon l'invention,
- la figure 3 représente un mode de réalisation d'un dispositif selon l'invention,
- la figure 4 représente plus en détail un mode de réalisation d'un filtre auto adaptatif selon l'invention,
- les figures 5a, 5b et 5c illustrent l'évolution de différents signaux mis en oeuvre au sein d'un dispositif selon l'invention, et
- la figure 6 illustre une mode de réalisation d'un système selon l'invention.

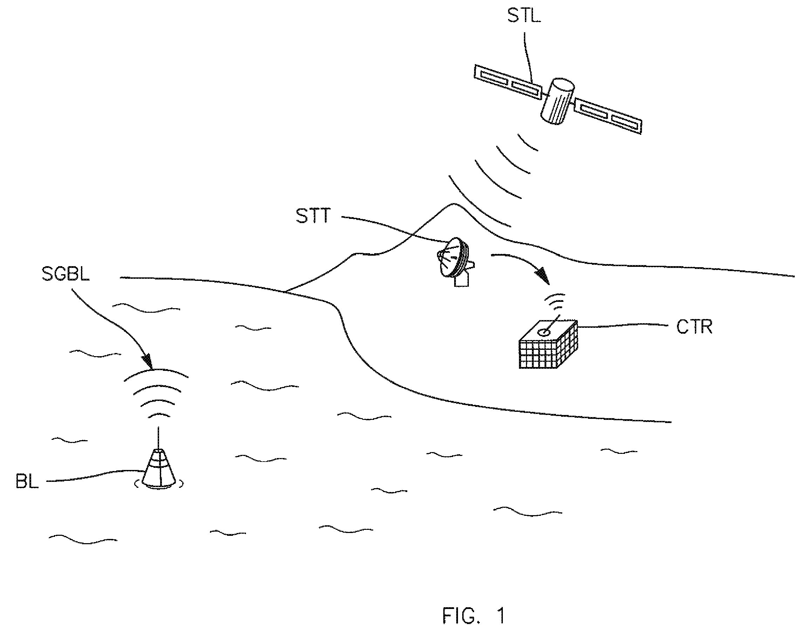

On se réfère à la figure 1, qui illustre un exemple d'utilisation de l'invention. Cette utilisation concerne le traitement de signaux numérique de balises de type ARGOS STD BD, ici une balise maritime référencé BL. La balise émet des signaux numériques SGBL qui sont reçus par un satellite STL, et plus particulièremenr par un récepteur incorporé au sein de ce satellite. Ce dernier traite les messages contenus dans ces signaux numériques puis les transfère vers une station terrestre STT. La station terrestre transmet automatiquement les messages vers un centre de traitement ARGOS, CTR. Celui-ci détermine la position de la balise émettrice puis distribue les résultats aux utilisateurs.

L'invention concerne notamment la réception et le traitement des signaux numériques par le récepteur du satellite.

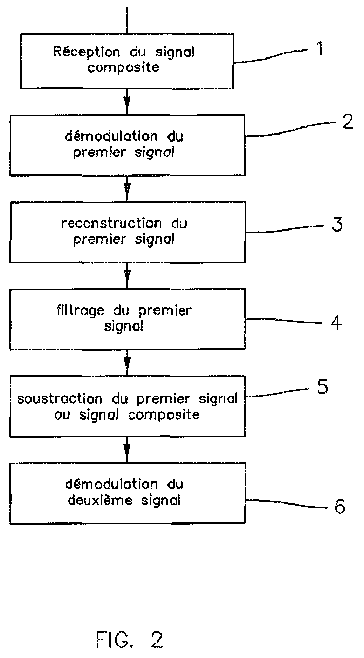

La figure 2 décrit dans les grandes lignes les principales étapes d'un mode de mise en oeuvre d'un procédé selon l'invention.

L'invention comprend une démodulation de deux signaux superposés au sein d'un signal composite, de façon à récupérer l'information binaire qu'ils véhiculent. Pour ce faire, on procède tout d'abord à la démodulation du signal ayant la plus forte amplitude, puis à la démodulation de l'autre signal.

Plus précisément, le mode de mise en oeuvre illustré sur la figure 2 comprend une première étape 1 concernant la réception des signaux numériques. Ces signaux numériques proviennent de plusieurs sources, par exemple plusieurs balises (généralement deux balises) telles que celle représentée sur la figure 1.

Ces signaux numériques sont distincts mais superposés dans des domaines de temps et de fréquences. On considère ici que l'on se trouve dans le cas classique de deux signaux superposés, formant un signal composite. Leurs niveaux d'amplitude sont relativement proches, toutefois de préférence, le rapport d'amplitude entre les deux signaux est d'au moins 5 dB. On considère ici que le signal issu d'une première balise, appelé premier signal possède le niveau d'amplitude le plus élevé. L'autre signal numérique, issu d'une deuxième balise est appelé deuxième signal.

On procède à une démodulation 2 du premier signal, celui-ci ayant un niveau d'amplitude plus élevé. La démodulation d'un signal numérique de forte amplitude, couplée à d'autres signaux numériques est connue de l'homme du métier. Le premier signal démodulé est alors reconstruit 3. On obtient ainsi les informations binaires contenues dans le premier signal numérique.

On filtre alors le premier signal reconstruit de façon à le conformer au premier signal contenu dans le signal composite reçu 4. A l'issue de ce filtrage on obtient un premier signal filtré très proche du signal reçu. Ce filtrage sera expliqué plus en détail ci-après.

Le premier signal filtré est soustrait au signal composite reçu, 5. On obtient, à l'issue de cette soustraction, un signal représentatif du deuxième signal. Celui-ci est utilisé de deux façons.

Tout d'abord, il est multiplié à un coefficient de convergence et au premier signal reconstruit, est utilisé en tant que signal de consigne pour ajuster les paramètres de filtrage du premier signal reconstruit.

Enfin, il est utilisé pour la démodulation du deuxième signal, 6.

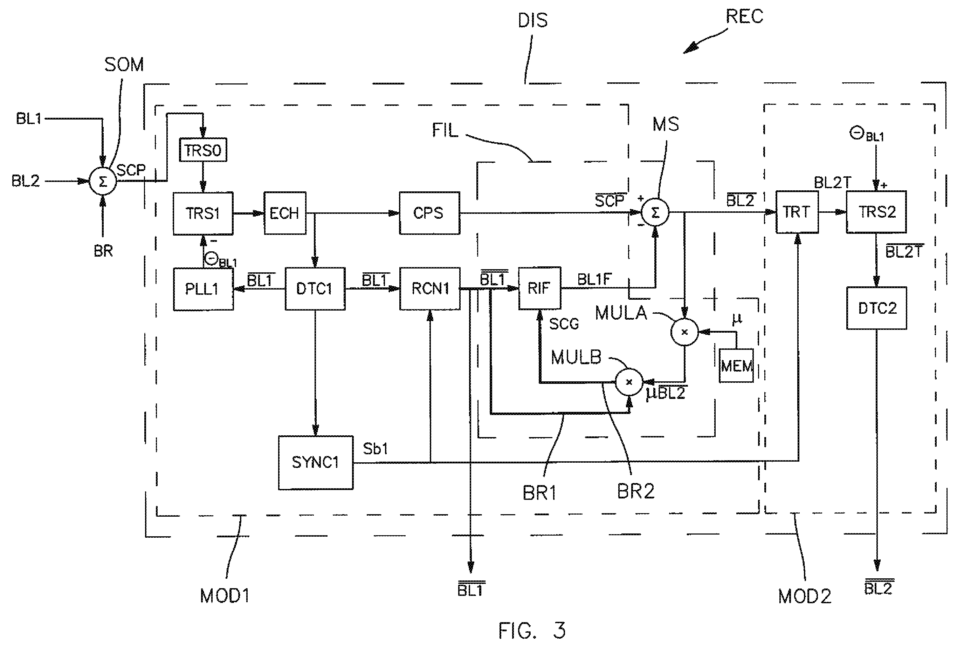

On se réfère à présent à la figure 3 qui illustre plus précisément un mode de réalisation du dispositif DIS de traitement des signaux numériques selon l'invention au sein d'un récepteur REC, par exemple un satellite. Un sommateur SOM correspond à l'entrée du récepteur REC. Il reçoit les signaux issus d'une première et d'une deuxième balises, respectivement référencés BL1 et BL2. Du bruit BR se superpose également aux signaux issus des balises. En sortie du sommateur SOM est délivré un signal composite SCP. Celui-ci est délivré en entrée du dispositif de traitement DIS.

Le dispositif DIS a notamment pour fonction de réaliser une démodulation des deux signaux BL1 et BL2 superposés.

Pour ce faire il est ici décomposé en un premier et un deuxième modules MOD1 et MOD2, respectivement dédiés à la démodulation du premier et du deuxième signal.

Le signal composite SCP subit tout d'abord une première transposition en fréquence, opérée par un moyen de transposition TRS0, par exemple un mélangeur, incorporé au sein du premier module MOD1. Cette transposition a pour but de décaler le signal composite dans une bande de fréquence de quelques centaines de kHz. En effet, le signal composite reçu appartient à une bande de fréquence de l'ordre de 400MHz, son traitement impliquerait un dispositif de traitement très complexe.

A l'issue de cette première transposition, on procède à une deuxième transposition en fréquence à l'aide d'un autre moyen de transposition en fréquence TRS1. Ce dernier a pour fonction de centrer le signal sur la phase estimée du signal de la balise 1, $\Theta_{BL1}$ de façon à pouvoir travailler en mode numérique.

Le signal composite échantillonné est alors délivré à un échantillonneur ECH. Puis chaque échantillon du signal composite est envoyé à un moyen de détection et de démodulation du signal issu de la balise 1, DTC1. Dans cet exemple, on considère que le niveau d'amplitude du signal de la balise 1, BL1, est supérieur à celui du signal de la balise 2, de préférence, d'au moins 5dB. Bien entendu le rôle des signaux peut être échangé. Le signal démodulé issu de traitement effectué par le moyen DTC1 est nommé premier signal démodulé et référencé $\overline{BL}1$.

Le premier signal démodulé $\overline{BL}1$ est transmis à une boucle à verrouillage de phase PLL1 de façon à récupérer la phase estimée du signal de la balise 1, $\Theta_{BL1}$. Celle-ci est transmise à l'autre moyen de transposition en fréquence TRS1 pour ajuster la transposition de fréquence du signal composite SCP.

D'autre part, le premier signal démodulé $\overline{BL1}$ est transmis à un bloc SYNC1 de détection du signal de synchronisation au niveau bit. Ce bloc SYNC1 est apte à déterminer le signal de synchronisation au niveau bit, Sb1 du premier signal BL1, en traitant le premier signal démodulé $\overline{BL}1$.

Enfin, le premier signal démodulé $\overline{BL}1$ est également transmis à un moyen de reconstruction RCN1 couplé en sortie du moyen de démodulation DTC1. Le moyen de reconstruction RCN1 a pour fonction de reconstruire un signal comportant les informations binaires à partir du premier signal démodulé $\overline{BL}1$ et à l'aide du signal de synchronisation Sb1. Le signal délivré en sortie du moyen de reconstruction RCN1 est nommé premier signal reconstruit et est référencé $\overline{\overline{BL1}}$. Ce signal $\overline{\overline{BL1}}$ contient l'ensemble des informations binaires véhiculées par le premier signal BL1. Il est délivré en sortie du dispositif DIS.

Pour améliorer la démodulation du deuxième signal BL2, on filtre le premier signal reconstruit $\overline{\overline{BL1}}$, de façon à obtenir à l'issue de la soustraction un signal proche du deuxième signal BL2.

Pour ce faire on cherche à lisser le premier signal reconstruit $\overline{\overline{BL1}}$, pour le conformer le plus possible au signal de la première balise BL1. Le premier signal reconstruit $\overline{\overline{BL1}}$ est alors transmis à un filtre à réponse impulsionnelle finie RIF dans le but de l'égaliser. Par ailleurs, les paramètres du filtre à réponse impulsionnelle finie RIF sont ajustables en fonction d'un signal de consigne SCG, qui sera décrit plus en détail ci-après. Le premier signal filtré est référencé BL1 F.

A la sortie de l'échantillonneur ECH, les échantillons du signal composite sont également transmis à un module de compensation CPS, apte à compenser le retard dû au temps de traitement, sur le signal composite. Le signal composite compensé est référencé $\overline{\overline{SCP}}$.

Celui-ci est délivré à un moyen de soustraction MS, qui reçoit sur une autre entrée le premier signal filtré BL1 F. Le moyen de soustraction MS est alors capable de soustraire le premier signal filtré BL1 F au signal composite compensé $\overline{\overline{SCP}}$, de façon à délivrer un signal représentatif du deuxième signal, référencé $\overline{BL2}$.

Le moyen de soustraction MS et le filtre à réponse impulsionnelle finie RIF forment un filtre auto-adaptatif FIL.

De manière à élaborer le signal de consigne SCG précité, le signal représentatif du deuxième signal $\overline{BL2}$ est délivré à un premier multiplieur MULA qui reçoit également sur une autre entrée, un coefficient de convergence μ, issu d'un moyen de mémorisation MEM.

Le produit μ. $\overline{BL2}$ est délivré à un deuxième multiplieur MULB qui reçoit sur une autre entrée le premier signal reconstruit $\overline{\overline{BL1}}$, via une branche BR1.

Cette branche BR1 sera décrite plus en détail ci-après. Le produit μ $\overline{BL2}$. $\overline{\overline{BL1}}$ forme le signal de consigne SCG. Celui-ci est délivré au filtre à réponse impulsionnelle finie RIF, via une branche BR2, décrite plus en-détail ci-après.

Le filtre à réponse impulsionnelle finie RIF, comporte notamment un ajustement des paramètres en fonction du signal de consigne SCG. Plus précisément, cet ajustement est opéré de manière itérative pour chaque échantillon des différents signaux mis en jeu. En d'autres termes, pour un échantillon donné, les paramètres de filtrage ont été ajustés en fonction de l'échantillon précédent. Les inventeurs ont remarqué que cette configuration du filtre à réponse impulsionnelle finie RIF, complètement différente d'une configuration classique de ce type de filtre, permet de lisser le signal $\overline{\overline{BL1}}$ de façon à le conformer au premier signal BL1. Un exemple d'un premier signal filtré est décrit ci-après.

Le signal représentatif du deuxième signal $\overline{BL2}$, issu du moyen de soustraction MS est délivré à un moyen de traitement TRT apte à traiter le signal représentatif du deuxième signal $\overline{BL2}$, aux endroits correspondant aux transitions du premier signal. En effet, à ces endroits apparaissent des pics parasites, perturbant le signal.

Ce traitement est effectué en fonction du signal de synchronisation Sb1 précité. Le moyen de traitement TRT est incorporé au sein du deuxième module MOD2.

Le signal représentatif du deuxième signal traité est référencé BL2T. Il est délivré à un autre moyen de transposition de fréquence TRS2 auquel on délivre également la phase estimée du signal de la balise 1, $\Theta_{BL1}$. Cet autre moyen de transposition TRS2 a pour fonction de compenser la première transposition effectuée par le moyen de transposition en fréquence TRS1.

Le signal représentatif du deuxième signal traité et transposé est référencé $\overline{BL2T}$.

On démodule le deuxième signal à partir du signal représentatif du deuxième signal traité transposé BL2T. Cette démodulation est effectuée par un autre moyen de démodulation DTC2. Il délivre en sortie un signal référencé $\overline{BL2}$. Ce signal émis en sortie du dispositif DIS comporte les informations binaires véhiculées par le deuxième signal BL2 reçu par le récepteur REC.

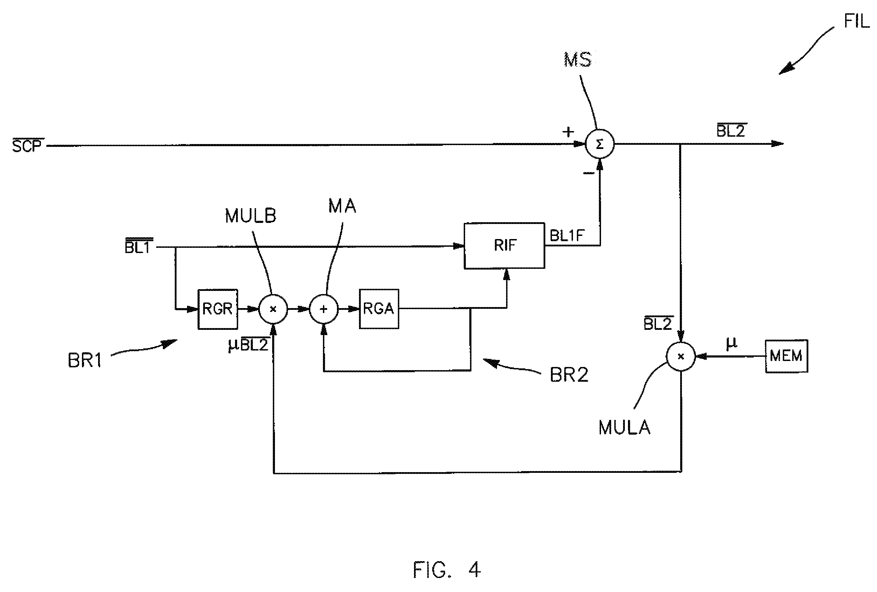

On se réfère à présent à la figure 4 qui illustre plus précisément le filtre auto-adaptatif FIL.

La branche BR1 comprend un registre RGR, qui a pour fonction de stocker les échantillons du signal $\overline{\overline{BL1}}$ durant le temps de traitement du signal μ. $\overline{BL2}$. Le registre RGR permet de compenser le retard dû au temps de traitement.

La branche BR2 comprend un moyen d'addition MA couplé à un registre accumulateur RGA, classiquement associé à un filtre à réponse finie. Ce registre RGA permet de corriger chaque nouvel échantillon du signal arrivant en entrée du moyen d'addition MA en provenance du multiplieur MULB, avec les valeurs des échantillons précédents. En d'autres termes, il vient :

$$BL2(n-1)T = SCP(n-1)T - BLI1F(n-1)T,$$

et

$$\alpha[k,nT] = \alpha[k,(n-1)T] + \mu.\overline{\overline{BL2}}((n-1)T).\overline{\overline{BL1}}((n-1-k)T),$$

où :

- T est la période d'échantillonnage,
- nT est l'instant d'échantillonnage, et
- $\alpha[k,nT]$ est le coefficient d'échantillonnage de rang k à l'instant d'échantillonnage nT.

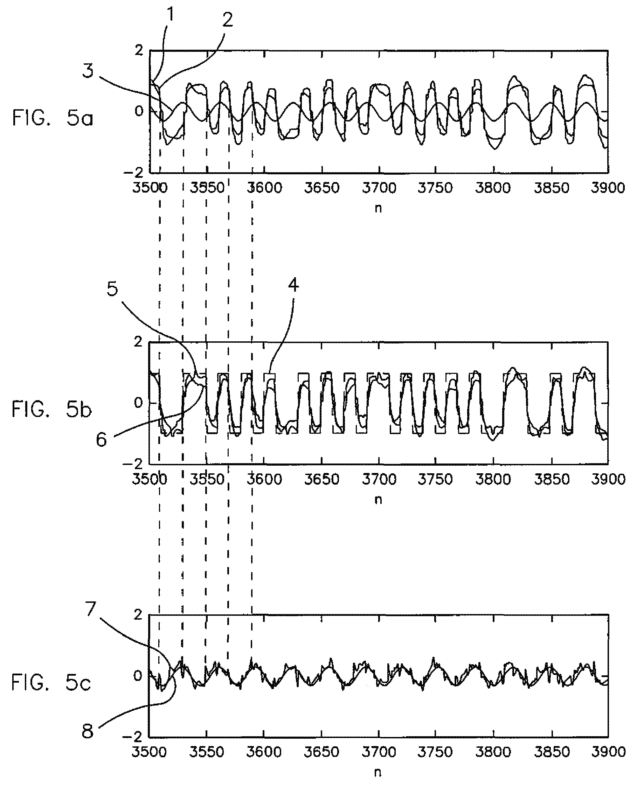

On se réfère à présent aux courbes des figures 5a à 5c qui illustrent l'allure des différents signaux mis en oeuvre au sein du dispositif DIS.

Sur la figure 5a, la courbe référencée 1 représente le signal composite SCP. Les courbes référencées 2 et 3 correspondent respectivement au premier et au deuxième signal BL1 et BL2 d'une première et d'une deuxième balise, selon l'exemple décrit ci-avant. En d'autres termes, le signal composite (courbe 1) est la somme des signaux BL1 et BL2 (courbes 2 et 3) ainsi que d'un signal de bruit non représenté à des fins de simplification.

Sur la figure 5b, la courbe référencée 4 correspond aux informations binaires contenues dans le premier signal BL1, autrement dit le signal $\overline{\overline{BL1}}$.

La courbe référencée 5 correspond au premier signal filtré par le filtre à réponse impulsionnelle finie, BL1 F, dont la forme se rapproche de celle du signal BL1 de la courbe 1, figure 5a.

La courbe 6 est le signal composite SCP déjà représenté sur la figure 5a.

Enfin, sur la figure 5c, la courbe référencée 7 correspond au signal représentatif du deuxième signal $\overline{BL2}$. On note que chaque transition du premier signal BL1 génère un pic perturbateur sur le signal représentatif du deuxième signal $\overline{BL2}$, comme nous le montre les lignes de correspondance en pointillé.

La courbe référencée 8 correspond au signal BL2 idéal, compris dans le signal composite SCP.

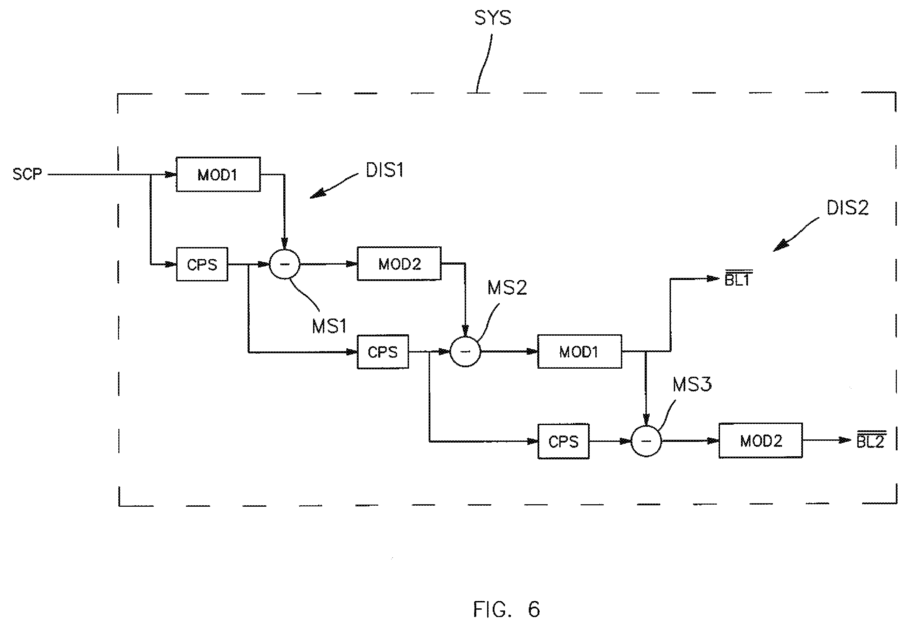

On se réfère à présent à la figure 6 qui illustre un système de traitement incorporant plusieurs dispositifs de traitement tels que décrits ci-avant. Dans cet exemple, le système SYS comprend deux dispositifs référencés DIS1 et DIS2 montés en cascade, de manière à procéder au traitement du signal composite de manière itérative. On améliore ainsi la précision du signal de synchronisation au niveau bit, ainsi que de la porteuse démodulée.

Parallèlement à chaque module MOD1 et MOD2 est couplé un module CPS de compensation du retard de traitement. Ainsi le premier module MOD1 génère un premier signal filtré. Ce dernier est soustrait au signal composite retardé par l'intermédiaire d'un moyen de soustraction MS1.

Le signal résultant de cette soustraction est un signal représentatif du deuxième signal provenant de la deuxième balise. Il est traité par un deuxième module MOD2, puis le signal issu de ce traitement est soustrait à l'aide d'un moyen de soustraction MS2 au signal composite, une nouvelle fois retardé. De même que précédemment, on retraite le signal résultant à l'aide d'un premier module MOD1. On récupère alors le signal reconstruit $\overline{\overline{BL1}}$.

Celui-ci est soustrait via un moyen de soustraction MS3 au signal composite une nouvelle fois retardé. Le signal résultant est traité par un autre deuxième module MOD2.

On récupère alors le signal $\overline{\overline{BL2}}$. Bien entendu, il est possible de cascader plus ou moins de premiers et de deuxièmes modules, selon le degré de précision que l'on souhaite obtenir.

**Revendications**

1. Procédé de traitement d'un premier et d'un deuxième signal à partir d'un signal composite incident comprenant lesdits premier et deuxième signaux superposés, le premier signal ayant une amplitude supérieure à celle du deuxième signal, le procédé étant **caractérisé par le fait qu'**il comprend une démodulation desdits premier et deuxième signaux superposés, comportant :

    - un échantillonnage du signal composite incident ;
    - une démodulation (2) puis une reconstruction (3) des données binaires du premier signal à partir de chaque échantillon du signal composite incident,
    - un filtrage (4) de type adaptatif du premier signal reconstruit de façon à le conformer au premier signal compris au sein du signal composite incident,

- une soustraction (5) du premier signal filtré au signal composite incident de façon à obtenir un signal représentatif du deuxième signal, et

- une démodulation (6) du deuxième signal à l'aide dudit signal représentatif du deuxième signal, et **par le fait que** pour chaque échantillon k coefficients mis en oeuvre pour le filtrage du premier signal reconstruit, k étant un entier, sont mis à jour à l'aide d'un signal de consigne fonction du n-1-k$^{\text{ième}}$ échantillon du premier signal reconstruit, n étant un entier représentatif de l'instant d'échantillonnage de l'échantillon considérée, du n-1$^{\text{ième}}$ échantillon du signal représentatif du deuxième signal et du coefficient de même rang pour l'échantillon précédent du signal composite incident.

**2.** Procédé selon la revendication précédente, dans lequel le premier et le deuxième signal sont sans code d'erreur et non orthogonaux entre eux.

**3.** Procédé selon l'une des revendications précédentes, comprenant en outre une étape de traitement du signal représentatif du deuxième signal aux endroits correspondant aux transitions du premier signal.

**4.** Procédé selon l'une des revendications précédentes, dans lequel lesdits premier et deuxième signaux appartiennent au même domaine temporel et fréquentiel.

**5.** Procédé selon l'une des revendications précédentes, dans lequel ladite démodulation des premier et deuxième signaux superposés est réitérée au moins deux fois.

**6.** Dispositif (DIS) de traitement d'un premier et d'un deuxième signal à partir d'un signal composite incident (SCP) comprenant lesdits premier et deuxième signaux superposés (BL1, BL2), le premier signal (BL1) ayant une amplitude supérieure à celle du deuxième signal (BL2), le dispositif étant **caractérisé par le fait qu'**il comprend :

- un moyen d'échantillonnage (ECH) couplé en amont du moyen de démodulation, apte à recevoir le signal composite en entrée, et à délivrer en sortie des échantillons du signal composite au moyen de démodulation (DTC1),

- un moyen de démodulation (DTC1) apte à démoduler le premier signal à partir du signal composite,

- un moyen de reconstruction (RCN1) couplé en sortie du moyen de démodulation (DTC1), apte à reconstruire les données binaires du premier signal à partir du premier signal démodulé ($\overline{BL1}$),

- un moyen de filtrage (RIF) de type adaptatif apte à recevoir et à filtrer le premier signal reconstruit ($\overline{\overline{BL1}}$) de façon à le conformer au premier signal compris au sein du signal composite incident,

- un moyen de soustraction (MS) apte à recevoir d'une part le signal composite incident, et d'autre part le premier signal filtré (BL1 F), de façon à soustraire le premier signal filtré au signal composite incident, et à délivrer un signal représentatif du deuxième signal ($\overline{BL2}$),

- un autre moyen de démodulation (DTC2) apte à démoduler le deuxième signal à partir du signal représentatif du deuxième signal ($\overline{BL2}$),

pour chaque échantillon k coefficients mis en oeuvre pour le filtrage du premier signal reconstruit, k étant un entier, étant mis à jour à l'aide d'un signal de consigne fonction du n-1-k$^{\text{ième}}$ échantillon du premier signal reconstruit, n étant un entier représentatif de l'instant d'échantillonnage de l'échantillon considérée, du n-1$^{\text{ième}}$ échantillon du signal représentatif du deuxième signal et du coefficient de même rang pour l'échantillon précédent.

**7.** Dispositif selon la revendication 6, comprenant en outre un moyen de traitement des transitions (TRT), apte à traiter ledit signal représentatif du deuxième signal aux endroits correspondant aux transitions du premier signal, le moyen de traitement des transitions (TRT) étant couplé en sortie du moyen de démodulation (DTC1).

**8.** Dispositif selon l'une des revendications 6 ou 7, dans lequel ledit moyen de filtrage (RIF) est un filtre à réponse finie comprenant :

- une première entrée apte à recevoir le premier signal reconstruit ($\overline{\overline{BL1}}$),

- une deuxième entrée dite de commande apte à recevoir un signal de consigne (SCG) fonction du premier signal reconstruit, du signal représentatif du deuxième signal et d'un coefficient de convergence, et

- une sortie apte à délivrer le premier signal filtré (BL1 F).

9. Dispositif selon la revendication précédente, dans lequel le moyen de soustraction (MS) et le moyen de filtrage (RIF) sont couplés de façon à former un filtre auto adaptatif (FIL).

10. Utilisation du dispositif selon l'une des revendications 6 à 9, au sein d'un satellite (STL) apte à recevoir des signaux (SGBL) émis par des balises (BL) de type ARGOS.

11. Système de traitement (SYS) comprenant au moins deux dispositifs (DIS1, DIS2) selon l'une des revendications 6 à 9, montés en cascade.

12. Utilisation du système selon la revendication précédente, au sein d'un satellite (STL) apte à recevoir des signaux (SGBL) émis par des balises (BL) de type ARGOS.

## Patentansprüche

1. Verfahren zum Verarbeiten eines ersten und eines zweiten Signals auf der Basis eines einfallenden zusammengesetzten Signals, das das erste und das zweite überlagerte Signal umfasst, wobei das erste Signal eine größere Amplitude hat als diejenige von dem zweiten Signal, wobei das Verfahren **dadurch gekennzeichnet ist, dass** es eine Demodulation des ersten und zweiten überlagerten Signals umfasst, das Folgendes beinhaltet:

- Abtasten des einfallenden zusammengesetzten Signals;
- Demodulieren (2), dann Rekonstruieren (3) von binären Daten des ersten Signals auf der Basis jedes Sample des einfallenden zusammengesetzten Signals;
- Adaptivfiltern (4) des ersten rekonstruierten Signals, um es zu dem zweiten Signal zu formen, das in dem einfallenden zusammengesetzten Signal enthalten ist;
- Subtrahieren (5) des ersten gefilterten Signals von dem einfallenden zusammengesetzten Signal, um ein Signal zu erhalten, das das zweite Signal repräsentiert; und
- Demodulieren (6) des zweiten Signals mit Hilfe des das zweite Signal repräsentierenden Signals und aufgrund der Tatsache, dass für jedes Sample k, wobei k eine ganze Zahl ist, zum Filtern des ersten rekonstruierten Signals implementierte Koeffizienten mit einem Sollwertsignal aktualisiert werden, das vom n-1-k-ten Sample des ersten rekonstruierten Signals, wobei n eine den Abtastzeitpunkt des betrachteten Sample repräsentierende ganze Zahl ist, von dem das zweite Signal repräsentierenden n-1-ten Sample des Signals und vom Koeffizienten desselben Rangs für das vorhergehende Sample des einfallenden zusammengesetzten Signals abhängig ist.

2. Verfahren nach dem vorherigen Anspruch, wobei das erste und zweite Signal keinen Fehlercode haben und nicht orthogonal zueinander sind.

3. Verfahren nach einem der vorherigen Ansprüche, das ferner einen Schritt des Verarbeitens des Signals beinhaltet, das das zweite Signal an den Stellen repräsentiert, die den Übergängen des ersten Signals entsprechen.

4. Verfahren nach einem der vorherigen Ansprüche, wobei das erste und das zweite Signal zur selben Zeit- und Frequenz-Domäne gehören.

5. Verfahren nach einem der vorherigen Ansprüche, wobei die Demodulation des ersten und zweiten überlagerten Signals wenigstens zweimal wiederholt wird.

6. Vorrichtung (DIS) zum Verarbeiten eines ersten und eines zweiten Signals auf der Basis eines einfallenden zusammengesetzten Signals (SCP), das das erste und zweite überlagerte Signal (BL1, BL2) umfasst, wobei das erste Signal (BL1) eine größere Amplitude hat als diejenige von dem zweiten Signal (BL2), wobei die Vorrichtung **dadurch gekennzeichnet ist, dass** sie Folgendes umfasst:

- ein Abtastmittel (ECH), das stromaufwärts des Demodulationsmittels gekoppelt ist, wobei das Abtastmittel das zusammengesetzte Signal am Eingang empfangen und Samples des zusammengesetzten Signals am Ausgang dem Demodulationsmittel (DTC1) zuführen kann;
- ein Demodulationsmittel (DTC1), das das erste Signal auf der Basis des zusammengesetzten Signals demodulieren kann;
- ein Rekonstruktionsmittel (RCN1), das an dem Ausgang des Demodulationsmittels (DTC1) gekoppelt ist und die binären Daten des ersten Signals auf der Basis des ersten demodulierten Signales ($\overline{BL}1$) rekonstruieren kann;

- ein Adaptivfiltermittel (RIF) zum Empfangen und Filtern des ersten rekonstruierten Signales ($\overline{\overline{BL1}}$), um es zu dem ersten Signal zu formen, das in dem einfallenden zusammengesetzten Signal enthalten ist;

- ein Subtraktionsmittel (MS) zum Empfangen einerseits des einfallenden zusammengesetzten Signals und andererseits des ersten gefilterten Signals (BL1F), um das erste gefilterte Signal von dem einfallenden zusammengesetzten Signal zu subtrahieren und ein das zweite Signals ($\overline{BL2}$) repräsentierendes Signal zu liefern;

- ein anderes Demodulationsmittel (DTC2) zum Demodulieren des zweiten Signals auf der Basis des das zweite Signals ($\overline{BL2}$) repräsentierenden Signals,

für jedes Sample k, wobei k eine ganze Zahl ist, zum Filtern des ersten rekonstruierten Signals implementierte Koeffizienten mit einem Sollwertsignal aktualisiert werden, das vom n-1-k$^{ten}$ Sample des ersten rekonstruierten Signals, wobei n eine den Abtastzeitpunkt des betrachteten Sample repräsentierende ganze Zahl ist, vom n-1-$^{ten}$ Sample des das zweite Signal repräsentierenden Signals und vom Koeffizienten desselben Rangs für das vorhergehende Sample abhängig ist.

7.  Vorrichtung nach Anspruch 6, die ferner ein Übergangsverarbeitungsmittel (TRT) umfasst, das das Signal verarbeiten kann, das das zweite Signal an den Stellen repräsentiert, die den Übergängen des ersten Signals entsprechen, wobei das Übergangsverarbeitungsmittel (TRT) an dem Ausgang des Demodulationsmittels (DTC1) gekoppelt ist.

8.  Vorrichtung nach Anspruch 6 oder 7, wobei das Filtermittel (RIF) ein Filter mit endlicher Impulsantwort ist, die Folgendes umfasst:

    - einen ersten Eingang zum Empfangen des ersten rekonstruierten Signals ($\overline{\overline{BL1}}$);
    - einen zweiten Eingang, Steuereingang genannt, zum Empfangen eines Sollwertsignals (SCG) in Abhängigkeit von dem ersten rekonstruierten Signal, dem Signal, das das erste Signal und einen Konvergenzkoeffizienten repräsentiert; und
    - einen Ausgang zum Liefern des ersten gefilterten Signals (BL1F).

9.  Vorrichtung nach dem vorherigen Anspruch, wobei das Subtraktionsmittel (MS) und das Filtermittel (RIF) zum Bilden eines selbstadaptiven Filters (FIL) gekoppelt sind.

10. Verwendung der Vorrichtung nach einem der Ansprüche 6 bis 9 in einem Satelliten (STL), der von Baken (BL) des ARGOS-Typs emittierte Signale (SGBL) empfangen kann.

11. Verarbeitungssystem (SYS), das wenigstens zwei Verrichtungen (DIS1, DIS2) nach einem der Ansprüche 6 bis 9 in Kaskade montiert umfasst.

12. Verwendung des Systems nach dem vorherigen Anspruch innerhalb eines Satelliten (STL), der von Baken (BL) des ARGOS-Typs emittierte Signale (SGBL) empfangen kann.

**Claims**

1.  A method for processing a first and a second signal on the basis of an incident composite single comprising said first and second superposed signals, said first signal having a higher amplitude than that of the second signal, said method being **characterised in that** it comprises a demodulation of said first and second superposed signals comprising:

    - sampling said incident composite signal;
    - demodulating (2) then reconstructing (3) binary data of said first signal on the basis of each sample of said incident composite signal;
    - adaptive-type filtering (4) said first reconstructed signal so as to shape it to said first signal that is included within said incident composite signal;
    - subtracting (5) said first filtered signal from said incident composite signal so as to obtain a signal that represents said second signal; and
    - demodulating (6) said second signal using said signal that represents said second signal and by virtue of the fact that, for each sample, k coefficients implemented for filtering said first reconstructed signal, with k being an integer, are updated using a set point signal that is a function of the n-1-k$^{nth}$ sample of said first reconstructed signal, with n being an integer that represents the sampling instant of the considered sample, of the n-1$^{nth}$

sample of the signal that represents said second signal and of the coefficient with the same rank for the preceding sample of said incident composite signal.

2. The method according to the preceding claim, wherein said first and second signals do not have an error code and are not orthogonal to each other.

3. The method according to any one of the preceding claims, further comprising a step of processing the signal that represents said second signal at the points that correspond to the transitions of said first signal.

4. The method according to any one of the preceding claims, wherein said first and second signals belong to the same time and frequency domain.

5. The method according to any one of the preceding claims, wherein said demodulation of said first and second superposed signals is repeated at least twice.

6. A device (DIS) for processing a first and a second signal on the basis of an incident composite signal (SCP) comprising said first and second superposed signals (BL1, BL2), said first signal (BL1) having a higher amplitude than that of the second signal (BL2), said device being **characterised in that** it comprises:

> - a sampling means (ECH) coupled upstream of the demodulation means, which sampling means is capable of receiving said composite signal at input and of delivering samples of said composite signal at output to the demodulation means (DTC1);
> - a demodulation means (DTC1) capable of demodulating said first signal on the basis of said composite signal;
> - a reconstruction means (RCN1) coupled at the output of said demodulation means (DTC1) and capable of reconstructing the binary data of said first signal on the basis of the first demodulated signal' ($\overline{BL1}$);
> - an adaptive-type filtering means (RIF) capable of receiving and of filtering the first reconstructed signal ($\overline{\overline{BL1}}$) so as to shape it to said first signal that is included within said incident composite signal;
> - a subtracting means (MS) capable of receiving, on the one hand, said incident composite signal and, on the other hand, the first filtered signal (BL1F) so as to subtract said first filtered signal from said incident composite signal, and of delivering a signal that represents said second signal ($\overline{BL2}$);
> - a further demodulation means (DTC2) capable of demodulating said second signal on the basis of the signal that represents said second signal ($\overline{BL2}$),
> for each sample k coefficients implemented for filtering said first reconstructed signal, with k being an integer, are updated using a set point signal that is a function of the n-1-k$^{nth}$ sample of said first reconstructed signal, with n being an integer that represents the sampling instant of the considered sample, of the n-1$^{nth}$ sample of the signal that represents said second signal and of the coefficient with the same rank for the preceding sample.

7. The device according to claim 6, further comprising a means (TRT) for processing transitions that is capable of processing said signal that represents said second signal at the points that correspond to the transitions of said first signal, said means (TRT) for processing transitions being coupled at the output of said demodulation means (DTC1).

8. The device according to claim 6 or 7, wherein said filtering means (RIF) is a finite response filter comprising:

> - a first input capable of receiving said first reconstructed signal ($\overline{\overline{BL1}}$);
> - a second input, called control input, capable of receiving a set point signal (SCG) as a function of said first reconstructed signal, the signal that represents said second signal and a convergence coefficient; and
> - an output capable of delivering said first filtered signal (BL1F).

9. The device according to the preceding claim, wherein said subtracting means (MS) and said filtering means (RIF) are coupled so as to form a self-adaptive filter (FIL).

10. The use of the device according to any one of claims 6 to 9, within a satellite (STL) capable of receiving signals (SGBL) emitted by beacons (BL) of the ARGOS type.

11. A processing system (SYS) comprising at least two devices (DIS1, DIS2) according to any one of claims 6 to 9 mounted in a cascade like manner.

12. The use of the system according to the preceding claim, within a satellite (STL) capable of receiving signals (SGBL) emitted by beacons (BL) of the ARGOS type.

FIG. 1

FIG. 2

FIG. 3

EP 2 093 889 B1

FIG. 4

FIG. 5a

FIG. 5b

FIG. 5c

FIG. 6

EP 2 093 889 B1

**RÉFÉRENCES CITÉES DANS LA DESCRIPTION**

**Documents brevets cités dans la description**

- US 2003206577 A1
- EP 0491668 A
- US 20030035469 A1